# EUROPÄISCHE PATENTSCHRIFT

(11) **EP 1 914 490 B1**
(45) Veröffentlichungstag und Bekanntmachung des Hinweises auf die Patenterteilung: **20.10.2010**
(21) Anmeldenummer: 07014847.3
(22) Anmeldetag: 28.07.2007
(51) Int. Cl.: F24J 2/52

(54) **Flachdachaufsatz mit Solarmodulen**
Frame element for flat roof with solar modules
Structure pour toit plat dotée de modules solaires

(30) Priorität: 20.10.2006 DE 202006016382 U
(43) Veröffentlichungstag der Anmeldung: 23.04.2008
(73) Patentinhaber: hb Energietechnik Verwaltungs GmbH, 33378 Rheda-Wiedenbrück (DE)
(72) Erfinder: Hoeft, Klaus-Dieter, 33332 Gütersloh (DE); Duhay, Johannes, 33335 Gütersloh (DE); Kempkensteffen, Josef, 33397 Rietberg-Mastholte (DE)
(74) Vertreter: Schober, Mirko

(56) Entgegenhaltungen:
- EP-A- 1 104 029
- EP-A- 1 267 418
- EP-A- 1 306 907
- WO-A-94/00650
- WO-A2-03/038910
- DE-A1- 3 611 542
- DE-U1- 20 120 983
- JP-A- 9 177 270
- JP-A- 2000 064 523
- JP-A- 2000 269 533
- JP-A- 2001 094 134
- JP-A- 2006 261 567
- US-A- 6 148 570
- US-A1- 2002 195 138

## Beschreibung

Die Erfindung bezieht sich auf einen Flachdachaufsatz, der an einem Traggestell aufgenommene, tafelförmige Solarmodule aufweist.

Ein solcher Dachaufsatz ist aus dem Dokument DE 10 2005 033 780 A1 bekannt. Um den Dachaufsatz insbesondere gegen Windlasten zu sichern, ist das Traggestell an einer entsprechend tragfähigen Unterkonstruktion des Daches verankert. Die am Traggestell erforderlichen Stützen durchdringen die Dachhaut, die hierdurch in ihrer Funktion als wasserdichtes Dachelement beeinträchtigt wird. Um dem entgegenzuwirken, müssen an den Durchdringungsstellen der Dachhaut aufwendige Abdichtungsmaßnahmen ergriffen werden.

Es sind weiter Flachdachaufsätze mit Traggestellen bekannt, die lediglich auf die Dachhaut des Flachdachs reibschlüssig aufgesetzt werden, also die ohne die Dachhaut durchdringende Verankerungselemente auskommen. Die Stabilisierung gegen Windlasten wird bei diesen Traggestellen durch ein hohes Eigengewicht aufgebracht, wozu die Gestellteile selbst besonders schwer ausgeführt sein können, wie aus dem Dokument DE 203 12 641 U1 hervorgeht. In anderen Fällen ist das Traggestell mit Aufnahmevorrichtungen, wie Wannen, versehen, um eine Auflast aus einem Schüttgut aufbringen zu können. Eine solche Möglichkeit beschreibt das Dokument DE 203 11 967 U1.

Die Anordnung der Solarmodule bei den bekannten Dachaufsätzen erfolgt ohne weitere Berücksichtigung der aerodynamischen Verhältnisse insoweit, als die Module im randlichen Bereich überstehend angeordnet sind und nicht nur auf ihrer Oberseite sondern auch auf ihrer Unterseite Windangriffsflächen bieten.

So ist es aus den Dokumenten EP 1 306 907 A1 und WO 03/038910 A2 bekannt, die den Solarmodulen gegenüberliegende zweite Seite des Dachaufsatzes mit einer nach außen hin konkaven Wölbung zu versehen.

Der Teilbereich der Stirnseiten des Dachaufsatzes, der unterhalb der Solarmodule liegt, kann offen sein, auch können vertikale und horizontale Öffnungen im Bereich der Solarmodule vorgesehen werden.

Aus dem Dokument JP 2000-269533 ist des weiteren ein Flachdachaufsatz zur Aufnahme von Solarmodulen bekannt, dessen eine längslaufende, schräg zur Dachhaut stehende Längsseite von den Solarmodulen gebildet wird. An der zweiten Längsseite ist der Dachaufsatz offen. Es sind mit Abstand unterhalb der Unterseite der Module Flügelprofile mit zur Dachhaut hin konvexen Oberseiten angeordnet, die mit dem Traggestell der Solarmodule verbunden sind.

Ferner beschreiben die Dokumente EP 1 267 418 A2 und JP 2001-094134 Flachdachaufsätze mit Solarmodulen, die im Umriß dreieckförmig und in der Betriebslage an ihrer Unterseite zur Dachhaut hin offen sind.

Der Erfindung liegt die Aufgabe zugrunde, einen Flachdachaufsatz der eingangs genannten Art zu schaffen, welcher ohne Verankerung an der Dachkonstruktion auskommt und bei dem eine Ballastreduzierung durch Ausnutzung aerodynamischer Kräfte vorgesehen ist.

Diese Aufgabe wird durch die kennzeichnenden Merkmale des Anspruchs 1 aufweisenden Anordnung gelöst.

Für die Erfindung ist wesentlich, daß der Flachdachaufsatz einschließlich der Solarmodule einen an seinen Längsseiten weitgehend geschlossenen Dachaufbau darstellt, der unterseitig zur Dachhaut und an den Stirnseiten offen ist. Kritische Windrichtungen sind diejenigen, die senkrecht zu der Längsrichtung des Flachdachaufsatzes stehen oder eine dazu senkrechte Hauptkomponente haben. Solche Winde streichen an den offenen Stirnseiten des Dachaufsatzes entlang und erzeugen aufgrund der in ihnen herrschenden Druckverhältnisse im Innern des auch nach unten hin in der Betriebslage durch die Dachhaut geschlossenen Dachaufsatzes einen Unterdruck.

Dadurch saugt sich sozusagen der Dachaufsatz an der Dachhaut fest und die hierdurch entstehenden Anpreßkräfte im Bereich der Auflagerflächen des Traggestells tragen einschließlich der dadurch bedingten Reibung zur Sicherung des Dachaufsatzes gegen ein Verschieben, Umkippen oder Abheben bei. Der genutzte aerodynamische Effekt setzt voraus, daß der Bereich der Dachhaut, der den Dachaufsatz an seiner Unterseite abschließt, entsprechend wind- bzw. luftdicht ist, was bei der ohnehin erforderlichen Wasserdichtigkeit der Dachhaut nicht problematisch ist.

Vorteilhafte Ausgestaltungsmerkmale der Erfindung ergeben sich aus den Unteransprüchen.

Die Erfindung wird nachfolgend anhand der Zeichnung an einem Ausführungsbeispielen noch näher erläutert. Dabei zeigen:
- Fig. 1: in schematischer perspektivischer Wiedergabe einen Flachdachaufsatz und
- Fig. 2: in perspektivischer Darstellung einen Abschnitt eines Flachdachaufsatzes gemäß der Erfindung.

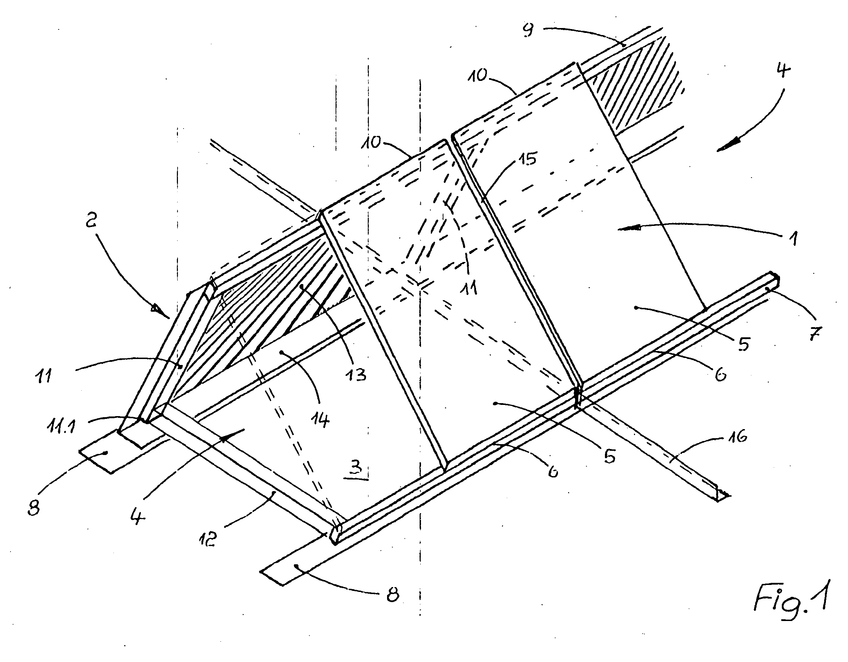

Im einzelnen erkennt man in Fig. 1 einen Flachdachaufsatz, der die Form eines spitzwinkligen oder rechtwinkligen Satteldachs hat. So weist der Flachdachaufsatz eine erste Aufsatzseite 1, eine im spitzen oder rechten Winkel hierzu stehende zweite Aufsatzseite 2 und beidendig offene Stirnseiten 4 auf. An seiner offenen Unterseite ist der Flachdachaufsatz in seiner Gebrauchslage durch die Dachhaut 3 geschlossen, die wasserdicht und entsprechend auch luftdicht ist.

An seiner ersten Seite 1 ist der Flachdachaufsatz mit Solarmodulen 5 versehen, welche die Form rechteckiger oder quadratischer Tafeln haben, die in einer gemeinsamen, relativ zur Dachhaut 3 geneigten Ebene angeordnet sind. Die Solarmodule 5 sind Bestandteil einer Photovoltaikanlage und werden in aller Regel in einer Mehrzahl nebeneinander angeordnet. Hierbei liegen die Unterkanten 6 und die Oberkanten 10 der Solarmodule 5 in einer Flucht, die parallel zur Dachhaut 3 verläuft. Dementsprechend haben die Solarmodule 5 dasselbe rechteckige Format und sie schließen in Längsrichtung des Dachaufsatzes aneinander an, wobei aus thermischen Gründen zwischen zwei benachbarten Solarmodulen 5 eine Fuge 15 mit geringer Breite freigelassen sein kann.

Die Solarmodule 5 werden auf einem Traggestell aufgelagert, welches zur ersten Aufsatzseite 1 hin einen oberen Firstträger 9 und einen unteren Bodenträger 7 aufweist. Unter Zwischenfügen einer Bautenschutzmatte 8 liegt der Bodenträger 7 auf der Dachhaut 3 auf, und auf dem Bodenträger 7 stützen sich die Solarmodule 5 nach unten ab. In dem Bereich ihrer Unterkanten 6 besteht ein windhemmender oder winddichter Anschluß der Solarmodule 5 an die Dachhaut 3. Im Zusammenhang mit der Erfindung bedeutet hier "winddicht" nicht, daß eine absolute Winddichtigkeit erzielt werden muß, es geht allein darum, den angestrebten aerodynamischen Effekt zu erreichen.

An der zweiten Seite 2 des Flachdachaufsatzes weist das Traggestell Stützträger 11 auf, die oberendig mit dem Firstträger 9 fest verbunden sind und an deren Unterenden 11.1 ein sie mit dem Bodenträger 7 an der ersten Aufsatzseite 1 verbindender Querriegel 12 fest angesetzt ist. Die Stützträger 11 erstrecken sich in einer gemeinsamen Ebene, die entsprechend der dreieckigen Umrißform des Flachdachaufsatzes relativ zu der Neigungsebene der Solarmodule 5 in entgegengesetzter Richtung geneigt ist. Außenseitig tragen die Stützträger 11 eine geschlossene Wandung 13, die an die Oberkanten 10 der Solarmodule 5 in besonderer, nachstehend noch beschriebener windhemmender Weise anschließt und von dort hinunter bis zum winddichten Anschluß an der Dachhaut 3 reicht.

Die geschlossene Wandung 13 besteht aus Metallblech, welches entlang seiner Unterkante mit einer Abkantung 14 versehen ist. Die zum Innern des Flachdachaufsatzes hin abgewinkelte Abkantung 14 untergreift die Unterenden 11.1 der Stützträger 11 und liegt ebenfalls unter Zwischenfügung einer Bautenschutzmatte 8 auf der Dachhaut 3 auf. Da die Solarmodule 5 ebene tafelförmige Gebilde sind und ebenso wie die Wandung 13 an der ihnen gegenüberliegenden Seite den Innenraum des Flachdachaufsatzes geschlossenwandig abschließen, wenn man von den thermischen Fugen 15 absieht, handelt es sich bei dem Flachdachaufsatz um ein in der Funktionslage satteldachförmiges, in seiner Umfangsrichtung geschlossenes Gebilde, welches lediglich an den Aufsatzstirnseiten 4 offen ist. Entsprechend der Größe der Solaranlage können mehrere der Flachdachaufsätze in paralleler Ausrichtung miteinander oder in fluchtender, voneinander beabstandeter Anordnung auf einem Flachdach vorgesehen werden. Für den mechanischen Verbund der Flachdachaufsätze sind Verbindungsschienen 16 vorgesehen, von denen eine in Figur 1 dargestellt ist.

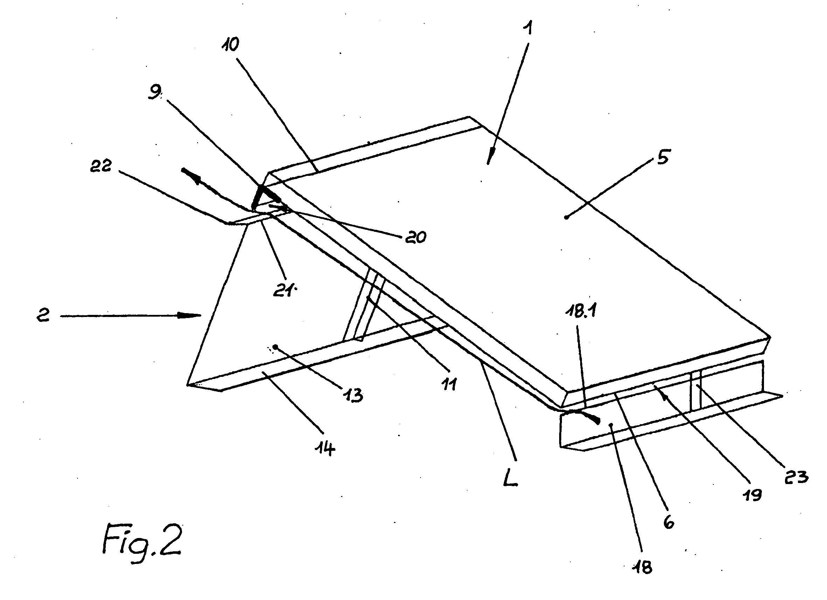

Figur 2 veranschaulicht den grundsätzlichen Aufbau eines Flachdachaufsatzes gemäß der Erfindung. Unabhängig davon, ob zwischen benachbarten Solarmodulen 5 die anhand von Figur 1 beschriebenen Fugen 15 vorgesehen werden, weist dieser Aufbau einen in seiner Längsrichtung sich erstreckenden ersten Winddurchlaßspalt 19 unterhalb der Unterkanten 6 der Solarmodule 5 auf. Hierbei sind die Unterkanten 6 der Solarmodule 5 mit Abstand von der Dachhaut 3 angeordnet, wobei dieser Abstand weitgehend durch eine drempelartige, geschlossene Wand 18 ausgefüllt ist. Zwischen der Oberkante 18.1 dieser Wand 18 und den Unterkanten 6 der Solarmodule 5 befindet sich der erste Winddurchlaßspalt 19, der in praktischer Ausführung absolut gesehen eine geringe Spaltweite von etwa nur 1 cm hat. Bei der drempelartigen Wand 18 handelt sich es ebenfalls um eine Blechkonstruktion, die um Stützen 23 ergänzt ist, auf welche die Solarmodule 5 mit ihren Unterkanten 6 aufgesetzt sind.

Wie Figur 2 weiter zeigt, befindet sich im Firstbereich des Flachdachaufsatzes ein zweiter, oberer Winddurchlaßspalt 20, der sich entsprechend unterhalb der Oberkanten 10 der Solarmodule 5 erstreckt und der parallel zum ersten Winddurchlaßspalt 19 verläuft. Nach oben hin wird der zweite Winddurchlaßspalt vom Firstträger 9 und nach unten hin von einer Oberkante 21 der geschlossenen Wandung 13 an der zweiten Aufsatzseite 2 begrenzt. An der Oberkante 21 der geschlossenen Wandung 13 ist ein Steg 22 abgekantet, der an der Außenseite der zweiten Aufsatzseite 2 nach Art eines Spoilers vorsteht.

Aufgrund der unterschiedlichen Höhenlage des ersten, unteren Winddurchlaßspaltes 19 und des zweiten, oberen Winddurchlaßspaltes 20 ergibt sich bei thermischer Belastung ein Kamineffekt, bei welchem der untere, erste Winddurchlaßspalt 19 als Lufteinlaß und der obere, zweite Winddurchlaßspalt 20 als Luftauslaß fungiert. Die durch den Kamineffekt erzielte Luftströmung L im Inneren des Flachdachaufsatzes trägt erheblich zur Kühlung und damit zur thermischen Entlastung bei. Diese wird noch dadurch gefördert daß die Weite des zweiten, oberen Winddurchlaßspaltes 20 größer als die des unteren, ersten Winddurchlaßspaltes 19 ist, also in praktischer Ausführung etwa 1,5 cm beträgt. Je nach der Windrichtung wird zudem noch der Unterdruck im Inneren des Flachdachaufsatzes verstärkt und damit trotz der verbesserten Wärmeabfuhr die Hauptfunktion, nämlich die Fixierung des Flachdachaufsatzes an der Dachhaut 3 (Fig. 1), nicht beeinträchtigt.

## Patentansprüche

1. Flachdachaufsatz mit einem Tragegestell mit daran aufgenommenen Solarmodulen, die an einer ersten längsseitigen Aufsatzseite (1) in einer gemeinsamen, zur Dachhaut (3) schrägen Ebene aneinander anschließen und mit ihren Unter- und Oberkanten (6,10) parallel zur Dachhaut (3) sowie miteinander fluchtend angeordnet sind, wobei ferner der Flachdachaufsatz an seiner zweiten längsseitigen Aufsatzseite (2) eine geschlossene Wandung (13) zwischen den Oberkanten der Solarmodule (5) und der Dachhaut (3) aufweist, wobei die zweite längsseitige Aufsatzseite relativ zu den Solarmodulen (5) entgegengesetzt geneigt ist und die beiden Aufsatzstirnseiten (4) offen sind, wobei weiterhin die Aufsatzunterseite offen ist und in der Betriebslage von der Dachhaut (3) geschlossen ist, wobei zwischen den Unterkanten der Solarmodule (5) und der Dachhaut (3) eine windhemmende oder winddichte Verbindung besteht, wobei bei kritischen Winden in Richtung senkrecht zur Flachdachaufsatz-Längsrichtung oder mit einer dazu senkrechten Hauptkomponente im Innern des Flachdachaufsatzes ein Unterdruck erzeugt ist, wobei Anpresskräfte im Bereich der Auflagerflächen des Tragegestells entstehen, wobei unterhalb der Solarmodule (5) im Bereich bis zur Dachhaut hin ein erster, sich in Längsrichtung des Flachdachaufsatzes erstreckender Winddurchlassspalt (19) und unterhalb der Oberkanten (10) der Solarmodule (5) im Bereich zur geschlossenen Wandung (13) an der zweiten Aufsatzseite hin ein zweiter zum ersten Winddurchlassspalt (19) parallel verlaufender Winddurchlassspalt (20) angeordnet ist, **dadurch gekennzeichnet, dass** die Weite des ersten Winddurchlassspalts (19) am Flachdachaufsatz kleiner als die Weite des zweiten Winddurchlassspaltes (20) ist.

2. Flachdachaufsatz nach Anspruch 1,
**dadurch gekennzeichnet,**
**dass** die erste Aufsatzseite (1) und die zweite Aufsatzseite (2) des Flachdachaufsatzes miteinander die Form eines Satteldachs aufweisen.

3. Flachdachaufsatz nach Anspruch 1 oder 2,
**dadurch gekennzeichnet,**
**dass** das Traggestell des Flachdachaufsatzes einen Firstträger (9) aufweist, an dem die Oberkanten (10) der Solarmodule (5) festgelegt sind und bis an den die geschlossene Wandung (13) an der zweiten Aufsatzseite (2) heranreicht.

4. Flachdachaufsatz nach einem der Ansprüche 1 - 3,
**dadurch gekennzeichnet,**
**dass** die geschlossene Wandung (13) an der zweiten Aufsatzseite (2) des Flachdachaufsatzes aus Metallblech besteht.

5. Flachdachaufsatz nach Anspruch 3 oder 4,
**dadurch gekennzeichnet,**
**dass** das Traggestell des Flachdachaufsatzes an der zweiten Aufsatzseite (2) Stützträger (11) aufweist, welche mit dem Firstträger (9) verbunden sind und auf denen die geschlossene Wandung (13) aufliegt.

6. Flachdachaufsatz nach Anspruch 4 und 5,
**dadurch gekennzeichnet,**
**dass** das die geschlossene Wandung (13) an der zweiten Aufsatzseite (2) des Flachdachaufsatzes bildende Blech entlang seiner unteren Kante eine Abkantung (14) aufweist, welche das aufstehende Unterende (11.1) der Stützträger (11) untergreift.

7. Flachdachaufsatz nach einem der vorigen Ansprüche,
**dadurch gekennzeichnet,**
**dass** der zweite Winddurchlassspalt (20) unterhalb der Oberkanten (10) der Solarmodule (5) von einer Oberkante (21) der geschlossenen Wandung (13) an der zweiten Aufsatzseite (2) des Flachdachaufsatzes begrenzt ist, von der ein Steg (22) abgekantet ist, der an der Außenseite der zweiten Aufsatzseite (2) vorsteht.

## Claims

1. Flat roof attachment with a supporting framework on which solar modules are received, which are connected to each other on a first longitudinal attachment side (1) in a common plane inclined in relation to the roof membrane (3) and are arranged with their lower and upper edges (6, 10) parallel to the roof membrane (3) and aligned with each other, wherein furthermore the flat roof attachment comprises on its second longitudinal attachment side (2) a closed wall (13) between the upper edges of the solar modules (5) and the roof membrane (3), wherein the second longitudinal attachment side is inclined in an opposing way relative to the solar modules (5) and the two attachment end faces (4) are open, wherein furthermore the attachment lower side is open and is closed by the roof membrane (3) in the operating position, wherein between the lower edges of the solar modules (5) and the roof membrane (3) a wind-blocking or windproof connection is formed, whereby in case of critical winds in a direction perpendicular to the flat roof attachment longitudinal direction or with a main component perpendicular thereto an under-pressure is produced inside the flat roof attachment, whereby contact forces are produced in the region of the support areas of the supporting frame, whereby a first wind through gap (19) extending in the longitudinal direction of the flat roof attachment is disposed below the solar modules (5) in the region as far as the roof membrane and a second wind through gap (20) extending parallel to the first wind through gap (19) is disposed below the upper edges (10) of the solar modules (5) in the region towards the closed wall on the second attachment side, **characterised in that** the width of the first wind through gap (19) on the flat roof attachment is smaller than the width of the second wind through gap (20).

2. Flat roof attachment according to claim 1,
**characterised in that**
the first attachment side (1) and the second attachment side (2) of the flat roof attachment have together the shape of a double pitch roof.

3. Flat roof attachment according to claim 1 or 2,
**characterised in that**
the supporting frame of the flat roof attachment comprises a ridge carrier (9), on which the upper edges (10) of the solar modules (5) are fixed and as far as which the closed wall (13) on the second attachment side (2) reaches.

4. Flat roof attachment according to one of the claims 1 - 3,
**characterised in that**
the closed wall (13) on the second attachment side (2) of the flat roof attachment consists of sheet metal.

5. Flat roof attachment according to claims 3 or 4,
**characterised in that**
the supporting frame of the flat roof attachment comprises on the second attachment side (2) support carriers (11) which are connected to the ridge carrier (9) and on which the closed wall (13) lies.

6. Flat roof attachment according to claim 4 and 5,
**characterised in that**
the metal sheet forming the closed wall (13) on the second attachment side (2) of the flat roof attachment comprises along its lower edge a chamfer (14) which engages below the upright lower end (11.1) of the support carriers (11).

7. Flat roof attachment according to one of the preceding claims,
**characterised in that**
the second wind through gap (20) is defined below the upper edges (10) of the solar modules (5) by an upper edge (21) of the closed wall (13) on the second attachment side (2) of the flat roof attachment, of which a web (22) is chamfered, which projects on the outer side of the second attachment side (2).

## Revendications

1. Structure pour toit plat avec un support doté de modules solaires, qui se raccordent les uns aux autres, dans une première face longitudinale (1) de la structure, dans un plan commun, oblique par rapport à la couverture du toit (3), et sont disposés, avec leurs bords inférieurs et supérieurs (6, 10) parallèlement à la couverture du toit (3), ainsi qu'en alignement les uns par rapport aux autres, la structure pour toit plat présentant en outre, sur sa deuxième face longitudinale (2), entre les bords supérieurs des modules solaires (5) et la couverture du toit (3), une cloison fermée (13), la deuxième face longitudinale de la structure étant inclinée à l'opposé des modules solaires (5) et les deux faces frontales (4) de la structure étant ouvertes, sachant en outre que la face inférieure de la structure est ouverte et, en état d'exploitation, fermée par la couverture du toit (3), une liaison réprimant le vent ou étanche au vent étant prévue entre les bords inférieurs des modules solaires (5) et la couverture du toit (3), une dépression étant générée à l'intérieur de la structure pour toit plat, en cas de vents critiques, perpendiculairement à la direction longitudinale de la structure pour toit plat ou avec une composante perpendiculaire, des forces de pression se produisant dans la région des surfaces d'appui du support, sachant qu'une première fente de passage du vent (19), qui s'étend dans la direction longitudinale de la structure pour toit plat, est disposée au-dessous des modules solaires (5), dans la région allant jusqu'à la couverture du toit, et qu'une deuxième fente de passage du vent (20), qui s'étend parallèlement à la première fente de passage du vent (19), est disposée au-dessous des bords supérieurs (10) des modules solaires (5), dans la région dirigée vers la cloison fermée (13), sur la deuxième face de la structure,
**caractérisée en ce que**
la largeur de la première fente de passage du vent (19) sur la structure pour toit plat est inférieure à la largeur de la deuxième fente de passage du vent (20).

2. Structure pour toit plat selon la revendication 1,
**caractérisée en ce que**
la première face (1) et la deuxième face (2) de la structure pour toit plat réalisent ensemble la forme d'un toit en selle.

3. Structure pour toit plat selon revendication 1 ou 2,
**caractérisée en ce que**
le support de la structure pour toit plat présente un support de faîte (9), auquel sont fixés les bords supérieurs (10) des modules solaires (5), et qui s'étend jusqu'à la cloison fermée (13), sur la deuxième face (2) de la structure.

4. Structure pour toit plat selon l'une des revendications 1 - 3,
**caractérisée en ce que**
la cloison fermée (13) sur la deuxième face (2) de la structure pour toit plat consiste en tôle métallique.

5. Structure pour toit plat selon revendication 3 ou 4,
**caractérisée en ce que**
le support de la structure pour toit plat présente, sur la deuxième face (2) de la structure, des appuis (11), qui sont reliés au support de faîte (9) et sur lesquels repose la paroi fermée (13).

6. Structure pour toit plat selon revendication 4 ou 5, **caractérisée en ce que**
la tôle, qui forme la cloison fermée (13), sur la deuxième face (2) de la structure pour toit plat, présente, le long de son bord inférieur, un pli (14), qui accroche par le bas l'extrémité inférieure en saillie (11.1) de l'appui (11).

7. Structure pour toit plat selon l'une des revendications précédentes,
**caractérisée en ce que**
la deuxième fente de passage du vent (20), au-dessous des bords supérieurs (10) des modules solaires (5), est limitée par un bord supérieur (21) de la cloison fermée (13), sur la deuxième face (2) de la structure pour toit plat, à partir de laquelle est pliée une patte (22), qui est en saillie sur le côté extérieur de la deuxième face (2) de la structure.
